# EUROPÄISCHE PATENTSCHRIFT

(11) **EP 3 967 532 B1**
(45) Veröffentlichungstag und Bekanntmachung des Hinweises auf die Patenterteilung: **07.06.2023**
(21) Anmeldenummer: 21196030.7
(22) Anmeldetag: 10.09.2021
(51) Int. Cl.: B60J 1/18, B60J 7/12

(54) **FALTVERDECK FÜR EIN CABRIOLET-FAHRZEUG**
FOLDING COVERING FOR A CONVERTIBLE VEHICLE
TOIT DÉCAPOTABLE POUR UN VÉHICULE CABRIOLET

(30) Priorität: 10.09.2020 DE 102020211393
(43) Veröffentlichungstag der Anmeldung: 16.03.2022
(73) Patentinhaber: Magna Car Top Systems GmbH, 74321 Bietigheim-Bissingen (DE)
(72) Erfinder: SUESS, Reinhard, 74831 Gundelsheim (DE); RAKUS, Bernd, 71277 Rutesheim (DE); WOCHNER, Ulrich, 71679 Asperg (DE); JOHE, Ralf, 74706 Osterburken (DE)
(74) Vertreter: Völger, Silke Beatrix

(56) Entgegenhaltungen:
- EP-A1- 3 495 184
- EP-A2- 1 164 042
- DE-A1-102013 011 590

## Beschreibung

Die Erfindung betrifft ein Faltverdeck für ein Cabriolet-Fahrzeug mit einem Verdeckbezug und einer in den Verdeckbezug mit einem Kunststoff eingeschäumten Heckscheibe, wobei die Umschäumung zwischen Fahrzeugverdeck und Heckscheibe entlang des gesamten Randes der Heckscheibe erfolgt.

### Stand der Technik

Verdecke für Fahrzeuge zum Öffnen weisen eine Verdeckschicht auf, die in der Regel flexibel ausgebildet ist. Man spricht hier auch von Soft-Top- oder Cabriolet-Verdecken.

Die DE 10 2013 011 590 A1 zeigt ein Kraftfahrzeug mit einem Faltverdeck, umfassend eine äußere Verdeckschicht mit einer Aussparung, innerhalb der eine Heckscheibe angeordnet ist. Ein an die Aussparung angrenzender Randbereich der Verdeckschicht ist mit der Scheibe unter Zuhilfenahme eines PUR-Wulstelementes umlaufend verbunden. Das Wulstelement ist derart angespritzt ausgeführt, dass zumindest in einem Bereich des Randes der Heckscheibe der Verdeckbezug zur Heckscheibe einen Versatz nach innen in Richtung Fahrzeuginnenraum aufweist. Des Weiteren ist in dem gebildeten Verbindungsbereich ein Funktionselement in Form eines Profils zur Anbindung eines Spannbügels mit eingeschäumt.

Die EP 3 495 184 A1 zeigt ein verstellbares Faltverdeck eines Cabriolet-Fahrzeugs, welches einen Verdeckbezug mit einer Heckscheibe aufweist. Der Verdeckbezug ist von Verdeckbauteilen getragen und umfasst einen Spannbügel. Ein endseitiger Bereich des Verdeckbezugs ist ausgehend von einer unteren Randkante einer Heckscheibe über den Spannbügel geführt und an einem auf der Unterseite des Spannbügels an einem Verbindungsabschnitt gehalten.

Aus der DE10 2013 010 883 A1 ist ein Kraftfahrzeugverdeck bekannt, umfassend eine Verdeckschicht mit wenigstens einer Aussparung, innerhalb der eine Heckscheibe angeordnet ist, wobei ein die Aussparung umgebender Randbereich der Verdeckschicht mit dem äußeren Randbereich der Heckscheibe unter Verwendung eines PUR-Wulstelementes verbunden ist.

Der Verbindungsbereich zwischen Verdeckschicht und Heckscheibe wird derartig ausgestaltet, dass ein Polyurethan-Wulstelement den Randbereich der Verdeckschicht mit dem äußeren Randbereich der Heckschiene verbindet, und zugleich eine elektrische Sammelschiene zumindest teilweise übergreift. Die Verwendung von Polyurethanschaum zur Herstellung der Einfassung von Fahrzeugscheiben ist bekannt.

Ein derartiges Faltverdeck ist auch aus der DE 20 2006 017 746 U1 bekannt. Dieses Faltverdeck umfasst ebenfalls eine faltbare Verdeckschicht, die mittels eines Verdeckgestänges zwischen einer einen Fahrzeuginnenraum überdeckenden Schließstellung und einer diesen freigebenden Öffnungsstellung verstellbar ist. Die Verdeckschicht weist in einem in Schließstellung im Heckbereich befindlichen Abschnitt eine Aussparung auf, innerhalb der eine Heckscheibe angeordnet ist. Die Heckscheibe bzw. ein Heckscheibenrahmen ist umlaufend über eine Gießharzprofil an der Verdeckschicht angebunden.

Verbaut man diese Fahrzeugscheiben in einer festen Karosserie, sind die umschäumten Randbereiche verdeckt und stellen kein Problem dar. Verwendet man eine solche Fahrzeugscheibe als Heckscheibe in einem Faltverdeck wird die Heckscheibe komplett mit dem Verdeckbezug als Verdeckschicht mit umschäumten Randbereichen, hergestellt.

Bei diesen standardmäßig im Verdeckbezug eingebundenen Cabrio-Heckscheiben verläuft der Verdeckbezug unterhalb der Unterkante der Heckscheibe weiter in Verlängerung und bildet durch Umschlagen über das Spannbügelprofil den Abschluss des Faltverdecks.

Gerade im unteren Randbereich der Heckscheibe stellt das aber ein ästhetisches Problem dar, da nur wenig Verdeckbezug sichtbar wird. Des Weiteren muss in diesem Bereich eine durchgehende Dichtlinie auch in den seitlichen Randbereichen gewährleistet sein.

Es ist Aufgabe der Erfindung ein Faltverdeck mit einer Heckscheibe vorzuschlagen, das den unteren Randbereich der Heckscheibe mit dem Verdeckmaterial in einem sauberen Fugenabschluss ermöglicht, wobei eine sichere Abdichtung gewährleistet werden soll.

Diese Aufgabe wird durch die im Anspruch 1 angegebenen Merkmale gelöst.

Die Aufgabe wird gelöst mit einem Faltverdeck für ein Cabriolet-Fahrzeug mit einem Verdeckbezug und einer in den Verdeckbezug mit einem Kunststoff eingeschäumten Heckscheibe, wobei die Umschäumung zwischen Fahrzeugverdeck und Heckscheibe entlang des gesamten Randes der Heckscheibe erfolgt, und mit einem Spannbügel, wobei zumindest im unteren Bereich des Randes der Heckscheibe der Verdeckbezug zur Heckscheibe einen Versatz nach innen in Richtung Fahrzeuginnenraum aufweist.

Die Erfindung ermöglicht es, eine im Verdeckbezug entlang des gesamten Randes eingeschäumte Heckscheibe so aufzubauen, dass optisch mit der Unterkante der Heckscheibe die Fuge zum Verdeckkastendeckel bzw. Kofferraumdeckel einen sauberen Abschluss bildet.

Durch den umlaufend um die Heckscheibe eingeschäumten Verdeckbezug, entsteht keine Unterbrechung der Dichtlinie zwischen Verdeckbezug und Heckscheibe, vor allem im bisher schwierigen Übergangsbereich, seitlich entlang der Heckscheibe nach innen zum Fahrzeuginnenraum, sowie nach außen entlang des Spannbügels Richtung C-Säule.

Die Heckscheibe ist ringsum mit dem Verdeckbezug durch eine PU-Umschäumung befestigt. Der optische Eindruck, dass der Verdeckbezug nur an drei Seiten mit der Heckscheibe verbunden ist (oben, seitlich links und rechts) und die Unterkante der Heckscheibe den Abschluss bildet, entsteht dadurch, dass der unter der Heckscheibe und zur Unterkante der Heckscheibe nach innen versetzte, eingeschäumte Verdeckbezug, unterhalb des PU-Randes, welcher am unter Ende der Heckscheibe als Abschluss angespritzt ist, herausgeführt wird und durch den PU-Rand, der als Abschluss der Heckscheibe dient, abgedeckt wird, so dass der PU-Rand optisch den Heckscheibenabschluss bildet und nicht der darunter verlaufende Verdeckbezug.

Die Heckscheibe ist mit dem Spannbügel fest verbunden, hierdurch ist gewährleistet, dass bei einer Verstellbewegung des Faltverdecks zwischen einer Schließstellung und Öffnungsstellung keine Relativbewegung zwischen Heckscheibe und Spannbügel erfolgen kann.

Zur sicheren Anbindung der Heckscheibe an den Spannbügel werden vorteilhafterweise Blecheinleger mit Gewinde in der PU-Umschäumung der Heckscheibe umspritzt, mit deren Hilfe, die Heckscheibe mit dem umlaufenden oder U-förmigen Spannbügel bzw. mit an dem Spannbügel verbundenen Bauteilen fest verschraubt wird.

Vorteilhafterweise sind zur Anbindung der Heckscheibe an dem Spannbügel seitlich als Bauteile jeweils eine Anbindungsstrebe angeordnet. Die Anbindungsstreben sind über ihren ersten Endbereich an der Heckscheibe und über ihren zweiten Endbereich an dem Spannbügel festgelegt.

Die x, y und z Richtung bezeichnen die in einem Fahrzeugkoordinatensystem üblichen Richtungen, wobei die X-Richtung die Fahrzeuglängsrichtung, die y-Richtung die Fahrzeugquerrichtung und die z-Richtung die Fahrzeughochrichtung ist. Mit Y0 wird in der Fahrzeugquerrichtung die Fahrzeugmitte bezeichnet.

Das erfindungsgemäße Faltverdeck wird in unterschiedlichen Ausführungsformen nachfolgend näher beschrieben und in den Zeichnungen schematisch dargestellt.

Es zeigt:
- Figur 1 eine: perspektivische Darstellung eines erfindungsgemäßen Faltverdecks mit Heckscheibe in der Schließstellung,
- Figur 2: einen Schnitt entlang A-A bei Y0,
- Figur 3: einen Schnitt entlang B-B gemäß einer ersten Ausführungsform,
- Figur 4: einen Schnitt entlang C-C im Bereich der Anbindung der Heckscheibe an den Spannbügel im seitlichen Randbereich; und
- Figur 5: einen Schnitt entlang B-B in einer alternativen Ausführungsform.

### Beschreibung der Erfindung

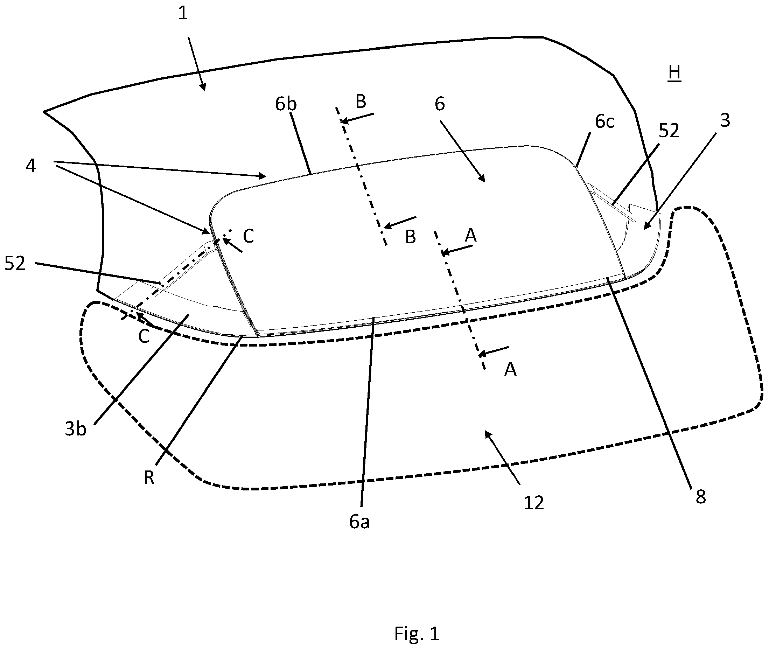

Fig. 1 zeigt in einer perspektivischen Ansicht von schräg hinten ein Faltverdeck 1 eines Cabriolet-Fahrzeugs. Das Faltverdeck 1 umfasst einen Verdeckbezug 4 bzw. Verdeckstoff, der mittels eines Verdeckgestänges zwischen einer einen Fahrzeuginnenraum überdeckenden Schließstellung und einer diesen freigebenden Öffnungsstellung verstellt werden kann. Das verstellbare Faltverdeck 1 erstreckt sich ausgehend von einem auf der Vorderseite V angeordneten nicht dargestellten Windschutzscheibenrahmen in den Heckbereich H des Fahrzeugs. Das Faltverdeck 1 ist bezogen auf eine Mittelachse symmetrisch aufgebaut.

Der entgegen der Fahrtrichtung weisende Heckbereich H des Faltverdecks 1 ist schräg nach unten weisend ausgebildet, wobei er in seinem unteren Endbereich durch einen Spannbügel 3 begrenzt wird. Der Spannbügel 3 liegt dabei auf einer Oberkante O der Karosserie bzw. des Verdeckkastendeckels 12 an. Der im Wesentlichen umlaufende Rand R des Faltverdecks 1 bildet hierbei den Auflagebereich zur Fahrzeugkarosserie und ist über Dichtungselemente 10 abgedichtet.

Figur 1 zeigt das Faltverdeck 1 in der Schließstellung. Aus der Darstellung kann man ersehen, dass der Verdeckbezug 4 im schräg verlaufenden heckseitigen Bereich einen Ausschnitt aufweist, in dem eine Heckscheibe 6 angeordnet ist. Die Heckscheibe 6 umfasst dabei einen unteren Randbereich 6a, einen oberen Randbereich 6b, sowie seitliche Randbereich e 6c. Zur unlösbaren Anbindung des Verdeckbezugs 4 an die Heckscheibe 6 ist die Heckscheibe 6 umlaufend, d.h. entlang des gesamten Rands mit allen Randbereichen 6a, 6b, 6c mit dem Verdeckbezug durch ein profilartige PU-Umschäumung 8 befestigt.

In die profilartige PU-Umschäumung 8 der Heckscheibe 6 werden Blecheinleger mit Gewinde umspritzt, mit deren Hilfe, die Heckscheibe 6 mit dem umlaufenden oder U-förmigen Spannbügel 3 fest verschraubt wird. Dadurch erfolgt keine Relativbewegung zwischen Heckscheibe 6 und Spannbügel 3 während der Verstellbewegung des Faltverdecks zwischen den unterschiedlichen Stellungen. Der Spannbügel 3 hält die Heckscheibe 6 fest in Position.

Zur Erzeugung der Stoffspannung in der Schließposition und zur Erzielung der notwendigen Formgebung wird der Spannbügel 3 über eine Sturmstange in die den Verdeckbezug 4 spannende Position gedrückt und in dieser Position fixiert. Der Spannbügel 3 weist eine im Wesentlichen u-förmige Form auf, und weist einen mittleren in Querrichtung verlaufenden Abschnitt 3a und seitliche Schenkel 3b auf, wobei die Form dem gewünschten Verlauf des Verdeckbezugs 4 im seitlichen und hinteren Bereich entspricht.

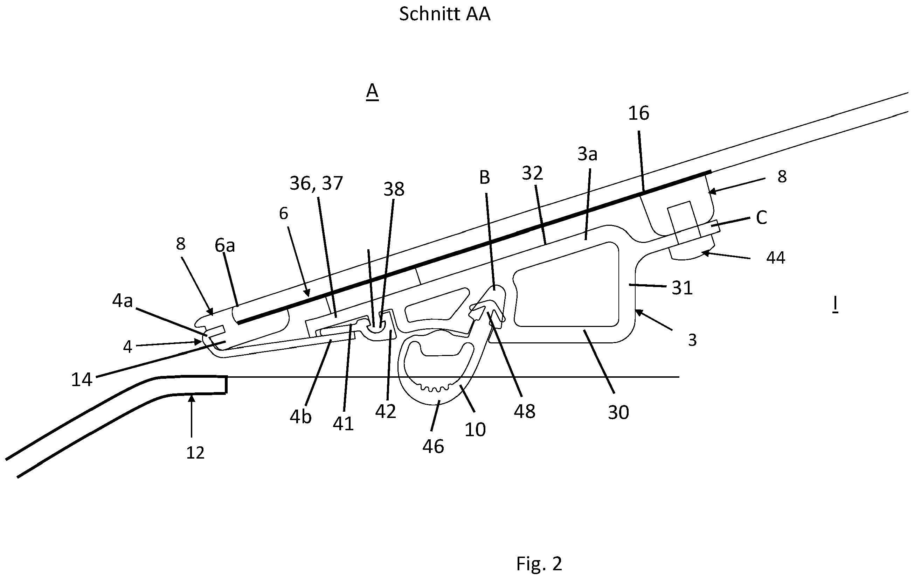

Figur 2 zeigt den im Schnitt keilförmigen Spannbügel 3, der als Hohlprofil ausgeführt ist. Der Spannbügel umfasst dabei eine Unterseite 30, einen senkrecht verlaufenden Seitenbereich 31 und einen schräg zur Heckseite H nach unten verlaufende Oberseite 32 auf. Im Bereich der Unterseite 30 des Spannbügels 3 sind benachbart zum Hohlprofil ein Aufnahmeabschnitt B ein Verbindungsabschnitt 36 und ein Befestigungsabschnitt C ausgebildet. Der Aufnahmeabschnitt B ist als kanalförmige nach unten offene Nut ausgeführt, die einen im Querschnitt verengten Öffnungsbereich aufweist. Des Weiteren ist der Spannbügel 3 mit dem Verbindungsabschnitt 36 ausgeführt, der auf der zur Oberseite 32 gegenüberliegenden Unterseite eine stegartige Leiste 37 mit verdicktem Endbereich 38 umfasst.

Der Befestigungsabschnitt C ist im Seitenbereich 31 angeformt und dient der Verschraubung 44 der Heckscheibe 6 an dem Spannbügel 3. Die PU Umschäumung 8 ist in diesem Bereich mit einem Blecheinleger mit Gewinde ausgeführt.

Das Hohlprofil mit Aufnahmeabschnitt B, Befestigungsabschnitt C und Verbindungsabschnitt 36 ist einstückig ausgebildet.

Der Spannbügel 3 kann aus Metall bevorzugt aus Leichtmetall, weiter bevorzugt aus Aluminium oder einer Aluminiumlegierung, hergestellt werden. Es ist jedoch auch denkbar, dass der Spannbügel aus Kunststoff hergestellt, wird. Aluminium bietet den Vorteil, dass es wesentlich leichter als Stahl ist, und wird bevorzugt zur Herstellung von Strangpressprofilen eingesetzt.

Die Figuren 2, 3 und 4 zeigen dabei Schnitte an unterschiedlichen Positionen der Heckscheibe 6 mit Anbindung an den Verdeckbezug 4 und den Spannbügel 3.

Die Figur 2 zeigt dabei die Anbindung und Anordnung der Heckscheibe 6 an dem Verdeckbezug 4 im Bereich der unteren Randkante 6a der Heckscheibe 6. Diese untere Randkante 6a weist als Abschluss randseitig die profilartige PU Umschäumung 8 auf. Der Verdeckbezug 4 ist dabei mittels eines ersten Randbereichs 4a in der profilartigen PU Umschäumung 8 eingeschäumt gehalten und um eine nach unten zum Verdeckkastendeckel 12 weisende Randkante 14 der PU Umschäumung 8 nach innen umgeschlagen und mittels eines zweiten Randbereichs 4b am Spannbügel 3 fixiert.

Dieser zweite endseitige Randbereich 4b des Verdeckbezugs 4 ist auf die Unterseite 30 des Spannbügels 3 geführt und dort an der Leiste 37 angebunden. Die Anbindung erfolgt über eine an dem Verdeckbezug 4 befestigte Halteleiste 41, die eine Aufnahme 42 aufweist (Kederanbindung). Der Verdeckbezug 4 ist über die Aufnahme 42 auf die Leiste 37 mit verdicktem Endbereich 38 aufgepresst und wird an dem Verbindungsabschnitt 36 formschlüssig gehalten. Der Verdeckbezug 4 weist somit in Bezug auf die Heckscheibe 6 im unteren Randbereich 6a einen Versatz nach innen in Richtung Fahrzeuginnenraum I auf und ist im Bereich des unteren Randbereichs 6a von der Außenseite A her gesehen für einen Nutzer nicht sichtbar.

Wie es aus der Darstellung der Figur 2 zu erkennen ist, liegt die Heckscheibe 6 mittels ihres unteren Randbereichs 6a auf der Oberseite 32 des Spannbügels 3 in seinem mittleren Bereich 3a von oben her gesehen auf und überdeckt den Spannbügel 3 in diesem Bereich vollständig. Dieser untere Randbereich 6a der Heckscheibe 6 umfasst einen geschwärzten Bereich 16. Somit sind der Spannbügel 3 und die Befestigungen des Spannbügels 3 mittels Verschraubung 44 von außen für einen Nutzer ebenfalls nicht sichtbar.

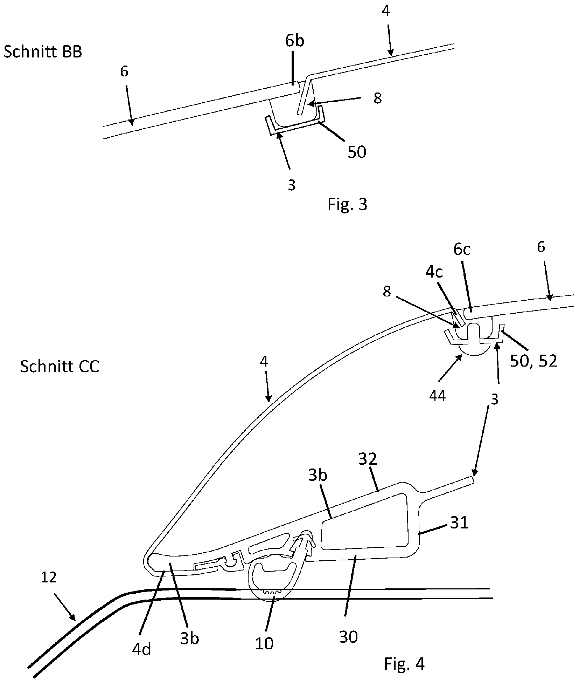

Das Faltverdeck 1 liegt im geschlossenen Zustand mit einem Verdeckrandbereich R über das randseitiges Dichtungselement 10 an dem Verdeckkastendeckel auf. Aus der Schnittdarstellung der Figur 2 und der Figur 4 kann man ersehen, dass das Dichtungselement 10 einen Grundkörper aus einem gummielastischen Hohlprofil 46 mit einer nach oben ragenden Halteleiste mit einem Kopfabschnitt 48 ausgeführt ist. Der Kopfabschnitt 48 weist dabei schräg nach außen verlaufende Halteabschnitte auf. Wie es aus der Figur zu erkennen ist, ist das Dichtungselement 10 mit dem Kopfabschnitt 48 in den Aufnahmeabschnitt B eingepresst, wobei sich die Halteabschnitte in dem Aufnahmeabschnitt B abstützen. Hierdurch wird die Anbindung des Dichtungselementes 10 an den Spannbügel 3 erreicht.

Die Figur 3 zeigt im Schnitt die Anbindung und Anordnung der Heckscheibe 6 an dem Verdeckbezug 4 im Bereich der oberen Randkante 6b der Heckscheibe 6. Diese obere Randkante 6b weist randseitig die profilartige PU Umschäumung 8 auf. Der Verdeckbezug 4 ist dabei mittels eines Randbereichs in der profilartigen PU Umschäumung 8 eingeschäumt gehalten. Zur Stabilisierung ist in dem Bereich der oberen Randkante ein u-förmig ausgeführtes Rahmenelement 50 angeordnet, welches die Heckscheibe 6 mit PU Umschäumung 8 in diesem Bereich aufnimmt. Das Rahmenelement 50 ist an der oberen Randkante 6b bis zu den seitlichen Randkanten 6c geführt und über seitliche Anbindungsstreben 52 mit dem Spannbügel 3 verbunden und dort gehalten.

Die Figur 4 zeigt im Schnitt die Anbindung und Anordnung der Heckscheibe 6 an dem Verdeckbezug 4 im Bereich der seitlichen Randkanten 6c der Heckscheibe 6. Diese seitliche Randkante 6b weist randseitig die profilartige PU Umschäumung 8 mit eingeschäumtem Blecheinleger und Gewinde auf. Der Verdeckbezug 4 ist dabei mittels eines ersten Randbereichs 4c in der profilartigen PU Umschäumung 8 eingeschäumt gehalten und ausgehend von dem Seitenbereich nach schräg seitlich unten zu dem seitlichen Schenkel 3b des Spannbügels 3 geführt und um den Verbindungsabschnitt 36 nach innen umgeschlagen und auf der Unterseite 30 des Spannbügels 3 über die Leiste mit Endabschnitt 38 fixiert. Die feste Anbindung der Heckscheibe 6 an den Spannbügel 3 erfolgt über die seitlichen Anbindungsstreben 52 die über eine Verschraubung 44 an dem eingeschäumten Blecheinleger mit Gewinde festgelegt sind.

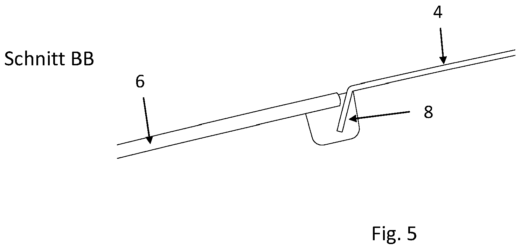

In der in der Figur 5 gezeigten alternativen Ausführungsform ist im oberen Randbereich 6b kein Rahmenelement 50 zur Stabilisierung und Abstützung der Heckscheibe 6 an dem Spannbügel 3 vorgesehen.

Der optische Eindruck, dass der Verdeckbezug 4 nur an drei Seiten an dem oberen Randbereich 6b sowie den seitlichen Randbereichen 6c mit der Heckscheibe 6 verbunden ist (oben, seitlich links und rechts) und der untere Randbereich 6a der Heckscheibe 6 den Abschluss bildet, entsteht dadurch, dass der unter der Heckscheibe und zur Unterkante der Heckscheibe 6 nach innen versetzte, eingeschäumte Verdeckbezug 4, unterhalb des PU-Randes, welcher am unter Ende der Heckscheibe 6 als Abschluss angespritzt ist, herausgeführt wird und durch den PU-Rand, der als Abschluss der Heckscheibe 6 dient, abgedeckt wird, so dass der PU-Rand optisch den Heckscheibenabschluss bildet und nicht der darunter verlaufende Verdeckbezug 4.

Der Spannbügelrahmen nimmt das Dichtungselement 10 auf, welches wie bei einem herkömmlichen Spannbügelverdeck die Dichtung zwischen Spannbügel 3 und Verdeckkastendeckel 12 bildet. Der Verdeckbezug 4 wird umlaufend um die Hinterkante des Spannbügels 3 geführt, sowie im Bereich der Unterkante Heckscheibe, um die PU-Umspritzung und mit einem angenähten Kunststoffkeder am Spannbügel 3, vor dem Dichtungselement 10 befestigt.

### Bezugszeichenliste

- 1: Faltverdeck
- 3: Spannbügel
- 3a: mittlerer Bereich
- 3b: seitliche Schenkel
- 4: Verdeckstoff
- 6: Heckscheibe
- 6a: unterer Randbereich
- 6b: oberer Randbereich
- 6c: seitliche Randbereiche
- 8: PU-Umschäumung
- 10: Dichtungselemente
- 12: Verdeckkastendeckel
- 14: Randkante
- 16: geschwärzter Bereich
- 30: Unterseite
- 31: Seitenbereich
- 32: Oberseite
- 36: Verbindungsabschnitt
- 37: Leiste
- 38: Endbereich
- 41: Halteleiste
- 42: Aufnahme
- 44: Verschraubung
- 50: Rahmenelement
- 52: Anbindungsstreben

## Patentansprüche

1. Faltverdeck (1) für ein Cabriolet-Fahrzeug mit einem Verdeckbezug (4) und einer in den Verdeckbezug (4) mit einem Kunststoff eingeschäumten Heckscheibe (6), wobei die Umschäumung (8) zwischen Verdeckbezug (4) und Heckscheibe (6) entlang des gesamten Randes der Heckscheibe (6) erfolgt, und mit einem Spannbügel (3), wobei der Spannbügel (3) im Heckbereich des Kraftfahrzeugs angeordnet ist und zumindest mit einem mittleren Bereich (3a) auf einem karosserieseitigen Bauteil in der Schließstellung aufliegt und eine Unterseite (30), einen senkrecht (z-Richtung) verlaufenden Seitenbereich (31) und einen schräg zur Heckseite (H) nach unten verlaufende Oberseite (32) aufweist, und wobei zumindest in einem Bereich des Randes der Heckscheibe (6) der Verdeckbezug (4) zur Heckscheibe (6) einen Versatz nach innen in Richtung Fahrzeuginnenraum (I) aufweist, wobei die Heckscheibe einen unteren Randbereich (6a), einen oberen Randbereich (6b) und seitliche Randbereiche (6c) umfasst und der Versatz des Verdeckbezugs (4) nach innen am unteren Randbereich (6a) angeordnet ist, und wobei die Heckscheibe (6) im unteren Randbereich (6a) mittelbar oder unmittelbar auf der Oberseite (32) des Spannbügels (3) aufliegt und diesen von der Außenseite her gesehen verdeckt, **dadurch gekennzeichnet, dass** im Bereich der unteren Randkante (6a) der Heckscheibe (6) als Abschluss randseitig die profilartige PU Umschäumung (8) angeordnet ist, wobei diese eine nach unten zum karosserieseitigen Bauteil weisende Randkante (14) umfasst, und wobei der Verdeckbezug (4) mittels eines ersten Randbereichs (4a) in der profilartigen PU Umschäumung (8) eingeschäumt gehalten und im weiteren Verlauf um die Randkante (14) nach innen in den Fahrzeuginnenraum (I) umgeschlagen und mittels eines zweiten Randbereichs (4b) am Spannbügel (3) fixiert gehalten ist.

2. Faltverdeck (1) für ein Cabriolet-Fahrzeug nach Anspruch 1, **dadurch gekennzeichnet, dass** die Heckscheibe (6) mit dem Spannbügel (3) derart fest verbunden ist, dass bei einer Verstellbewegung des Faltverdecks (1), zwischen einer Schließstellung in der ein Innenraum des Fahrzeugs überdeckt wird und einer Öffnungsstellung, in der der Innenraum freigegeben wird, keine Relativbewegung zwischen Heckscheibe (6) und Spannbügel (3) erfolgt.

3. Faltverdeck (1) für ein Cabriolet-Fahrzeug nach einem der vorangehenden Ansprüche, **dadurch gekennzeichnet, dass** die PU Umschäumung (8) ein um den gesamten Randbereich (6a, 6b, 6c) der Heckscheibe (6) verlaufendes Profil bildet, wobei dieses Profil zumindest im unteren Randbereich (6c) von der Außenseite her sichtbar ist.

4. Faltverdeck (1) für ein Cabriolet-Fahrzeug nach einem der vorangehenden Ansprüche, **dadurch gekennzeichnet, dass** der Spannbügel (3) im Wesentlichen u-förmig ausgebildet ist und einen mittleren Bereich (3a) und seitliche Schenkel (3b) aufweist, und wobei der Spannbügel (3) von der Außenseite (A) her gesehen unterhalb des unteren Randbereichs (6a) der Heckscheibe (6) verdeckt auf der Innenseite (I) angeordnet ist.

5. Faltverdeck (1) für ein Cabriolet-Fahrzeug nach einem der vorangehenden Ansprüche, **dadurch gekennzeichnet, dass** der Spannbügel (3) einen Verbindungsabschnitt (36) umfasst, der auf der Unterseite (30) eine stegartige Leiste mit einem verdickten Endbereich (38) umfasst, und dass der Spannbügel (3) auf der Unterseite (30) einen Aufnahmeabschnitt (B) zur Aufnahme eines Dichtungselements (10) umfasst.

6. Faltverdeck (1) für ein Cabriolet-Fahrzeug nach einem der vorangehenden Ansprüche, **dadurch gekennzeichnet, dass** der Spannbügel (3) des Weiteren einen Befestigungsabschnitt (C) umfasst, der am Seitenbereich (31) angeformt ist, der eine Fixierung der Heckscheibe (6) im unteren Randbereich (6a) mittels einer Verschraubung (44) herstellt.

7. Faltverdeck (1) für ein Cabriolet-Fahrzeug nach einem der vorangehenden Ansprüche, **dadurch gekennzeichnet, dass** in der PU-Umschäumung Blecheinleger mit Gewinde zur Herstellung einer Schraubverbindung mit dem Spannbügel (3) eingeschäumt sind.

8. Faltverdeck (1) für ein Cabriolet-Fahrzeug nach einem der vorangehenden Ansprüche, **dadurch gekennzeichnet, dass** die Heckscheibe (6) in den seitlichen Randbereichen (6c) über jeweils eine seitliche Anbindungsstrebe (52) an dem Spannbügel abgestützt unbeweglich fixiert ist.

## Claims

1. Folding covering (1) for a convertible vehicle, having a cover (4) and a rear window (6) foam-sealed into the cover (4) with a plastic, wherein the foam encapsulation (8) between the cover (4) and rear window (6) is undertaken along the entire border of the rear window (6), and having a tensioning bow (3), wherein the tensioning bow (3) is arranged in the rear region of the motor vehicle and rests at least with a central region (3a) on a body-side component in the closed position and has a bottom side (30), a side region (31) running perpendicularly (z direction) and a top side (32) running downwards obliquely with respect to the rear side (H), and wherein, at least in a region of the border of the rear window (6), the cover (4) is offset inwards with respect to the rear window (6) in the direction of the vehicle interior (I), wherein the rear window comprises a lower border region (6a), an upper border region (6b) and lateral border regions (6c), and the offset of the cover (4) is arranged inwards on the lower border region (6a), and wherein the rear window (6) rests in the lower border region (6a) indirectly or directly on the upper side (32) of the tensioning bow (3) and conceals the latter, as seen from the outer side, **characterized in that** the profile-like PU foam encapsulation (8) is arranged as an end on the border side in the region of the lower border edge (6a) of the rear window (6), said PU foam encapsulation comprising a border edge (14) pointing downwards to the body-side component, and wherein the cover (4) is kept foamed in place in the profile-like PU foam encapsulation (8) by means of a first border region (4a) and, as it runs further around the border edge (14), is folded over inwards into the vehicle interior (I) and kept fixed on the tensioning bow (3) by means of a second border region (4b).

2. Folding covering (1) for a convertible vehicle according to Claim 1, **characterized in that** the rear window (6) is fixedly connected to the tensioning bow (3) in such a manner that, during an adjustment movement of the folding covering (1) between a closed position, in which an interior of the vehicle is covered, and an open position, in which the interior is opened up, there is no relative movement between the rear window (6) and tensioning bow (3).

3. Folding covering (1) for a convertible vehicle according to either of the preceding claims, **characterized in that** the PU foam encapsulation (8) forms a profile running around the entire border region (6a, 6b, 6c) of the rear window (6), wherein said profile is visible at least in the lower border region (6c) from the outside.

4. Folding covering (1) for a convertible vehicle according to one of the preceding claims, **characterized in that** the tensioning bow (3) is substantially U-shaped and has a central region (3a) and lateral limbs (3b), and wherein the tensioning bow (3) is arranged on the inside (I) concealed below the lower border edge (6a) of the rear window (6), as seen from the outside (A).

5. Folding covering (1) for a convertible vehicle according to one of the preceding claims, **characterized in that** the tensioning bow (3) comprises a connecting section (36) which, on the bottom side (30), comprises a web-like strip with a thickened end region (38), and **in that** the tensioning bow (3) comprises, on the bottom side (30), a receiving section (B) for receiving a sealing element (10).

6. Folding covering (1) for a convertible vehicle according to one of the preceding claims, **characterized in that** the tensioning bow (3) furthermore comprises a fastening section (C) which is integrally formed on the side region (31) which produces fixing of the rear window (6) in the lower border region (6a) by means of a screw connection (44).

7. Folding covering (1) for a convertible vehicle according to one of the preceding claims, **characterized in that** sheet-metal inserts having a thread for producing a screw connection to the tensioning bow (3) are foamed into the PU foam encapsulation.

8. Folding covering (1) for a convertible vehicle according to one of the preceding claims, **characterized in that** the rear window (6) is fixed immovably in the lateral border regions (6c) in a manner supported on the tensioning bow via a respective lateral attachment strut (52).

## Revendications

1. Toit décapotable (1) pour un véhicule cabriolet avec un revêtement de toit (4) et une lunette arrière (6) incorporée par moussage dans le revêtement de toit (4) avec une matière plastique, le moussage (8) entre le revêtement de toit (4) et la lunette arrière (6) s'effectuant le long de tout le bord de la lunette arrière (6), et avec un arceau de serrage (3), l'arceau de serrage (3) étant agencé dans la zone arrière du véhicule automobile et reposant au moins par une zone centrale (3a) sur un composant côté carrosserie dans la position de fermeture et présentant un côté inférieur (30), une zone latérale (31) s'étendant verticalement (direction z) et un côté supérieur (32) s'étendant vers le bas en oblique par rapport au côté arrière (H), et au moins dans une zone du bord de la lunette arrière (6), le revêtement de toit (4) présentant un décalage par rapport à la lunette arrière (6) vers l'intérieur en direction de l'espace intérieur du véhicule (I), la lunette arrière comprenant une zone de bord inférieure (6a), une zone de bord supérieure (6b) et des zones de bord latérales (6c) et le décalage du revêtement de toit (4) vers l'intérieur étant agencé sur la zone de bord inférieure (6a), et la lunette arrière (6) reposant dans la zone de bord inférieure (6a) indirectement ou directement sur le côté supérieur (32) de l'arceau de serrage (3) et masquant celui-ci, vu depuis le côté extérieur, **caractérisé en ce que**, dans la zone de l'arête de bord inférieure (6a) de la lunette arrière (6), le moussage en PU de type profil (8) est agencé sur le bord en tant que fermeture, celle-ci comprenant une arête de bord (14) orientée vers le bas vers le composant côté carrosserie, et le revêtement de toit (4) étant maintenu incorporé par moussage dans le moussage en PU de type profil (8) au moyen d'une première zone de bord (4a) et étant ensuite rabattu vers l'intérieur dans l'espace intérieur du véhicule (I) autour de l'arête de bord (14) et étant maintenu fixé sur l'arceau de serrage (3) au moyen d'une deuxième zone de bord (4b).

2. Toit décapotable (1) pour un véhicule cabriolet selon la revendication 1, **caractérisé en ce que** la lunette arrière (6) est reliée fixement à l'arceau de serrage (3) de telle sorte que, lors d'un mouvement de réglage du toit décapotable (1), entre une position de fermeture dans laquelle un espace intérieur du véhicule est recouvert et une position d'ouverture dans laquelle l'espace intérieur est dégagé, aucun mouvement relatif ne se produit entre la lunette arrière (6) et l'arceau de serrage (3).

3. Toit décapotable (1) pour un véhicule cabriolet selon l'une quelconque des revendications précédentes, **caractérisé en ce que** le moussage en PU (8) forme un profil qui s'étend sur toute la zone de bord (6a, 6b, 6c) de la lunette arrière (6), ce profil étant visible depuis le côté extérieur au moins dans la zone de bord inférieure (6c).

4. Toit décapotable (1) pour un véhicule cabriolet selon l'une quelconque des revendications précédentes, **caractérisé en ce que** l'arceau de serrage (3) est configuré essentiellement en forme de U et présente une zone centrale (3a) et des branches latérales (3b), et l'arceau de serrage (3) étant agencé, vu depuis le côté extérieur (A), en dessous de la zone de bord inférieure (6a) de la lunette arrière (6), de manière masquée sur le côté intérieur (I).

5. Toit décapotable (1) pour un véhicule cabriolet selon l'une quelconque des revendications précédentes, **caractérisé en ce que** l'arceau de serrage (3) comprend une section de liaison (36) qui comprend sur le côté inférieur (30) une barre de type entretoise avec une zone d'extrémité (38) épaissie, et **en ce que** l'arceau de serrage (3) comprend sur le côté inférieur (30) une section de réception (B) pour recevoir un élément d'étanchéité (10).

6. Toit décapotable (1) pour un véhicule cabriolet selon l'une quelconque des revendications précédentes, **caractérisé en ce que** l'arceau de serrage (3) comprend en outre une section de fixation (C) qui est formée sur la zone latérale (31) et qui réalise une fixation de la lunette arrière (6) dans la zone de bord inférieure (6a) au moyen d'un vissage (44).

7. Toit décapotable (1) pour un véhicule cabriolet selon l'une quelconque des revendications précédentes, **caractérisé en ce que** des inserts en tôle avec filetage pour la réalisation d'une liaison vissée avec l'arceau de serrage (3) sont incorporés par moussage dans le moussage en PU.

8. Toit décapotable (1) pour un véhicule cabriolet selon l'une quelconque des revendications précédentes, **caractérisé en ce que** la lunette arrière (6) est fixée de manière immobile dans les zones de bord latérales (6c) par l'intermédiaire d'une entretoise d'attache latérale (52) sur l'arceau de serrage.
